# EUROPÄISCHE PATENTSCHRIFT

(11) **EP 1 753 207 B1**
(45) Veröffentlichungstag und Bekanntmachung des Hinweises auf die Patenterteilung: **12.03.2008**
(21) Anmeldenummer: 05017322.8
(22) Anmeldetag: 09.08.2005
(51) Int. Cl.: H04L 29/12, H04L 12/56

(54) **Autokonfiguration in einem ATM-Netz**
Autoconfiguration in an ATM network
Configuration automatique dans un réseau ATM

(43) Veröffentlichungstag der Anmeldung: 14.02.2007
(73) Patentinhaber: Nokia Siemens Networks GmbH & Co. KG, 81541 München (DE)
(72) Erfinder: Baumgarth, Thomas, 85375 Neufahrn (DE); Keutner, Konstantin, Dr., 85579 Neubiberg (DE); Sanneck, Henning, Dr., 81667 München (DE); Schmelz, Lars Christoph, 85540 Haar (DE)

(56) Entgegenhaltungen:
- EP-A- 1 227 641
- EP-A- 1 365 609
- EP-A- 1 511 332
- PATRICK M: "DHCP Relay Agent Information Option" IETF STANDARD, INTERNET ENGINEERING TASK FORCE, IETF, CH, 31. Januar 2001 (2001-01-31), XP015008829 ISSN: 0000-0003

## Beschreibung

Die Erfindung betrifft Verfahren und Vorrichtungen zum Konfigurieren einer ersten Einrichtung eines ATM-Netzes, bei dem die erste Einrichtung unter Verwendung von ersten ATM-Verbindungsinformationen eine DHCP-Anfrage an eine zweite Einrichtung versendet, wie z.B. in EP 1511332 A offenbart.

In Kommunikationssystemen werden Nachrichten zwischen Sender und Empfänger übertragen. Die Übertragung kann direkt oder über weiterleitende Einrichtungen erfolgen. Bekannt sind z.B. ATM-basierte (ATM: Asynchronous Transfer Mode) und IPbasierte (IP: Internet Protocol) Kommunikationsnetze. Diese können beispielsweise in Mobilfunkkommunikationssystemen, z.B. nach dem Standard GSM (Global System for Mobile Communications) oder UMTS (Universal Mobile Telecommunications System) eingesetzt werden.

Wird eine Einrichtung neu in ein IP-basiertes Netz eingebracht oder ändert sich die Adresse der Einrichtung innerhalb des IP-basiertes Netzes, so muss eine Konfiguration der IP-Schnittstelle der Einrichtung erfolgen. Hierzu geeignete Konfigurationsverfahren sind z.B. BOOTP (Bootstrap Protocol) und DHCP (Dynamic Host Configuration Protocol).

Der Erfindung liegt die Aufgabe zugrunde, Verfahren zur Konfiguration innerhalb eines ATM- und IP-basierten Netzes aufzuzeigen. Weiterhin sollen geeignete Einrichtungen zur Durchführung der Verfahren vorgestellt werden.

Diese Aufgabe wird durch ein Verfahren mit den Merkmalen des Anspruchs 1, sowie durch ein Verfahren und durch Vorrichtungen mit Merkmalen von nebengeordneten Ansprüchen gelöst. Vorteilhafte Ausgestaltungen und Weiterbildungen sind Gegenstand von Unteransprüchen.

Bei dem erfindungsgemäßen Verfahren zum Konfigurieren einer ersten Einrichtung eines ATM-Netzes versendet die erste Einrichtung unter Verwendung von ersten ATM-Verbindungsinformationen eine DHCP-Anfrage (DHCP: Dynamic Host Configuration Protocol) an eine zweite Einrichtung. Weiterhin empfängt die erste Einrichtung eine von der zweiten Einrichtung zur ersten Einrichtung unter Verwendung der ersten ATM-Verbindungsinformationen übertragene DHCP-Antwort. Die DHCP-Antwort enthält Informationen über zweite ATM-Verbindungsinformationen. Die erste Einrichtung verwendet die zweiten ATM-Verbindungsinformationen zur Versendung weiterer Nachrichten.

Bei der ersten Einrichtung, welche durch den DHCP-Nachrichtenaustausch konfiguriert werden kann, handelt es sich z.B. um einen Endknoten eines ATM-Netzes, welcher an einen oder mehrere weitere Knoten des ATM-Netzes angeschlossen ist. Bei der zweiten Einrichtung handelt es sich vorzugsweise um einen DHCP-Server, welcher dem Empfang und der Versendung von DHCP-Nachrichten dient und somit der Endknoten der DHCP-Kommunikation mit der ersten Einrichtung ist. Die Übertragung der DHCP-Nachrichten zwischen der ersten und der zweiten Einrichtung kann direkt oder über eine oder mehrere die DHCP-Nachrichten weiterleitende Knoten erfolgen. Die Nachrichtenübertragung über die einzelnen Knoten zwischen der ersten und der zweiten Einrichtung kann teilweise oder vollständig über ATM erfolgen. Bei den DHCP-Nachrichten handelt es sich um Nachrichten, welche der Spezifikation des DHCP-Standards entsprechen.

Für die Übertragung der DHCP-Nachrichten werden die ersten ATM-Verbindungsinformationen eingesetzt. Hierbei kann sich um eine bestimmte PVC (Permanent Virtual Circuit, permanente virtuelle Verbindung) handeln. Für die erste Einrichtung ist die PVC durch ein Wertepaar VPI (Virtual Path Identifier) und VCI (Virtual Channel Identifier) gekennzeichnet.

In Weiterbildung der Erfindung handelt es sich bei der Versendung weiterer Nachrichten unter Verwendung der zweiten ATM-Verbindungsinformationen um Nachrichtenversendungen an zumindest eine von der zweiten Einrichtung unterschiedliche Einrichtung. Dies bedeutet, dass in diesem Fall nicht die zweite Einrichtung der Endempfänger der weiteren Nachrichten ist, sondern eine andere Einrichtung. Somit werden die zweiten ATM-Verbindungsinformationen, über welche die erste Einrichtung von der zweiten Einrichtung informiert wurde, für eine Kommunikation der ersten Einrichtung mit einer weiteren Einrichtung eingesetzt. Zusätzlich oder alternativ können die zweiten ATM-Verbindungsinformationen auch für eine Nachrichtenversendungen an die zweite Einrichtung eingesetzt werden.

Bei dem zweiten erfindungsgemäßen Verfahren zum Konfigurieren einer ersten Einrichtung eines ATM-Netzes empfängt eine zweite Einrichtung eine von der ersten Einrichtung unter Verwendung von ersten ATM-Verbindungsinformationen zu der zweiten Einrichtung übertragene DHCP-Anfrage. Die zweite Einrichtung sendet eine DHCP-Antwort unter Verwendung der ersten ATM-Verbindungsinformationen an die erste Einrichtung, wobei die DHCP-Antwort Informationen über zweite ATM-Verbindungsinformationen enthält. Obige Erläuterungen hinsichtlich des ersten erfindungsgemäßen Verfahrens gelten entsprechend auch für das zweite erfindungsgemäße Verfahren.

Einer Ausgestaltung der Erfindung gemäß entsprechen die ersten ATM-Verbindungsinformationen einer vor der Versendung der DHCP-Anfrage eingerichteten ATM-Verbindung. Somit existiert eine Default-Verbindung, d.h. eine voreingestellte Verbindung, welche eingerichtet ist und zu Zwecken der Konfiguration eingesetzt werden kann.

Vorteilhaft ist es, wenn die DHCP-Anfrage und die DHCP-Antwort zwischen der ersten und der zweiten Einrichtung durch zumindest eine nicht-DHCP-fähige Einrichtung weitergeleitet werden. Ist eine Einrichtung des ATM-Netzes nicht-DHCP-fähig, so kann sie DHCP-Nachrichten zwar wie andere ATM-Nachrichten auch empfangen und weiterleiten, sie kann den DHCP-Inhalt der Nachrichten jedoch nicht als solchen verstehen und verarbeiten. Zusätzlich zur Weiterleitung der DHCP-Nachrichten durch eine oder mehrere nicht-DHCP-fähige Einrichtungen können die DHCP-Nachrichten zwischen der ersten und der zweiten Einrichtung durch eine oder mehrere IP- bzw. DHCP-fähige Einrichtungen weitergeleitet werden.

In Weiterbildung der Erfindung erfolgt unter Verwendung von in der DHCP-Antwort enthaltenen Informationen eine IP-Konfiguration und eine ATM-Konfiguration der ersten Einrichtung. Bei der ATM-Konfiguration handelt es sich um eine Konfiguration der ATM-Schnittstelle der ersten Einrichtung, d.h. um eine Konfiguration in Bezug auf diejenige Schicht oder Schichten des Protokollstapels der ersten Einrichtung, welche dem ATM-Protokoll entsprechen. Entsprechendes gilt für die IP-Konfiguration. Die Informationen, welche für die IP-Konfiguration benötigt werden, sind standardmäßig in einer DHCP-Antwort enthalten. Die für die ATM-Konfiguration verwendeten zweiten ATM-Verbindungsinformationen können z.B. in einem optionalen Feld der DHCP-Antwort enthalten sein.

Einer bevorzugten Weiterbildung der Erfindung gemäß wird das Verfahren in Bezug auf eine Mehrzahl von ersten Einrichtungen eingesetzt, wobei die ersten ATM-Verbindungsinformationen für die Mehrzahl der ersten Einrichtungen gleich sind. Es werden somit mehrere Einrichtungen des ATM-Netzes konfiguriert, wobei diese mehreren Einrichtungen an den gleichen oder an unterschiedliche ATM-Knoten angeschlossen sein können. Die mehreren zu konfigurierenden Einrichtungen verwenden die gleichen ATM-Verbindungsinformationen zu Konfigurationszwecken. Vorteilhaft ist es ferner, wenn eine dritte Einrichtung jeweils eine von den mehreren ersten Einrichtungen unter Verwendung der ersten ATM-Verbindungsinformationen gesendete DHCP-Anfrage empfängt, die DHCP-Anfragen vor der Weiterleitung auf ATM-Rahmenebene betrachtet, und die DHCP-Anfragen vor der Weiterleitung multiplext. Dieses Vorgehen ermöglicht die Verwendung der gleichen ATM-Verbindungsinformationen für mehrere an den gleichen ATM-Knoten angeschlossene zu konfigurierende Einrichtungen.

Vorzugsweise handelt es sich bei der ersten Einrichtung um eine Basisstation eines Mobilfunkkommunikationssystems, wie z.B. eines Systems nach dem Standard UMTS, und bei der zweiten Einrichtung um einen DHCP-Server.

In Ausgestaltung der Erfindung werden die ersten ATM-Verbindungsinformationen von der ersten Einrichtung ausschließlich zur Versendung von DHCP-Nachrichten eingesetzt. Dies bedeutet, dass für die Versendung anderer Nachrichten andere ATM-Verbindungsinformationen verwendet werden, da die ersten ATM-Verbindungsinformationen für Konfigurationszwecke reserviert sind.

Eine erste erfindungsgemäße Einrichtung eines ATM-Netzes weist Mittel auf zum Versenden einer DHCP-Anfrage an eine weitere Einrichtung unter Verwendung von ersten ATM-Verbindungsinformationen, Mittel zum Empfangen einer von der weiteren Einrichtung zu der Einrichtung unter Verwendung der ersten ATM-Verbindungsinformationen übertragenen DHCP-Antwort, wobei die DHCP-Antwort Informationen über zweite ATM-Verbindungsinformationen enthält, und Mittel zum Verwenden der zweiten ATM-Verbindungsinformationen zur Versendung weiterer Nachrichten.

Eine zweite erfindungsgemäße Einrichtung eines ATM-Netzes weist Mittel auf zum Empfangen einer von einer weiteren Einrichtung unter Verwendung von ersten ATM-Verbindungsinformationen zu der Einrichtung übertragenen DHCP-Anfrage, sowie Mittel zum Versenden einer DHCP-Antwort unter Verwendung der ersten ATM-Verbindungsinformationen an die weitere Einrichtung, wobei die DHCP-Antwort Informationen über zweite ATM-Verbindungsinformationen enthält.

Die beiden erfindungsgemäßen Einrichtungen eignen sich insbesondere zur Durchführung der erfindungsgemäßen Verfahren, wobei dies auch auf die Ausgestaltungen und Weiterbildungen zutreffen kann. Hierzu können sie weitere geeignete Mittel umfassen.

Im folgenden wird die Erfindung anhand eines Ausführungsbeispiels näher erläutert. Dabei zeigen:
- Figur 1:: einen Ausschnitt aus einem Kommunikationsnetz,
- Figur 2:: einen Nachrichtenaustausch im Rahmen einer DHCP-Kommunikation,
- Figur 3:: das Format eines optionalen Zusatzfeldes einer DHCP-Nachricht gemäß der Erfindung,
- Figur 4a:: eine Ausgestaltung eines Knotens des ATM-Netzes,
- Figur 4b:: einen Protokollstapel des Knotens der Figur 4a.

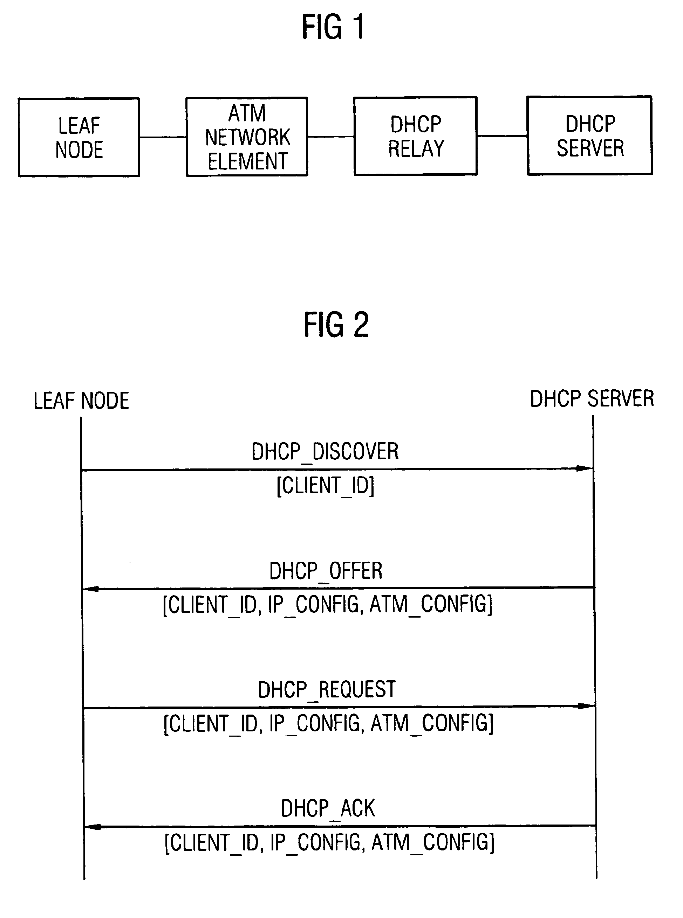

Figur 1 zeigt einen Ausschnitt aus einem Kommunikationsnetz, welches die Einrichtungen LEAF NODE, ATM NETWORK ELEMENT, DHCP RELAY und DHCP SERVER umfasst. Bei den Verbindungen zwischen den Einrichtungen LEAF NODE und ATM NETWORK ELEMENT, sowie zwischen den Einrichtungen ATM NETWORK ELEMENT und DHCP RELAY handelt es sich um ATM-Verbindungen. Die Einrichtungen LEAF NODE, ATM NETWORK ELEMENT, DHCP RELAY sind somit Bestandteil eines ATM-Netzes. Die Einrichtung DHCP SERVER ist über die Einrichtung DHCP RELAY an das ATM-Netz angeschlossen. Es ist auch möglich, dass die Einrichtung DHCP RELAY über ATM an die Einrichtung ATM NETWORK ELEMENT angeschlossen ist, in diesem Fall ist keine Einrichtung DHCP RELAY nötig.

Bei dem Kommunikationsnetz kann es sich z.B. um das O&M (Operation und Maintenance) Netz eines Mobilfunkkommunikationssystems nach dem Standard UTMS handeln. Die Einrichtung LEAF NODE, z.B. eine Basisstation des UTMS Mobilfunkkommunikationssystems, soll neu- oder umkonfiguriert werden. Beispielsweise kann die Einrichtung LEAF NODE neu in das ATM-Netz eingebracht worden sein oder ihre Position innerhalb des ATM-Netzes kann verändert worden sein. Weiterhin ist es möglich, dass eine Umkonfiguration stattfindet, da Parameter der ATM-Kommunikation der Einrichtung LEAF NODE geändert werden sollen. Zur Konfiguration der Einrichtung LEAF NODE wird DHCP (Dynamic Host Configuration Protocol) verwendet, beschrieben z.B. in R. Droms: Dynamic Host Configuration Protocol, RFC 2131, IETF, März 1997.

Im Rahmen der DHCP-Konfiguration empfängt die Einrichtung LEAF NODE ihre IP-Adresse von der Einrichtung DHCP SERVER. Bei den Endknoten der DHCP-Kommunikation handelt es sich somit um die Einrichtungen LEAF NODE und DHCP SERVER. Der Ablauf der DHCP-Kommunikation ist in Figur 2 dargestellt. Die die Nachrichten zwischen den Einrichtungen LEAF NODE und DHCP SERVER weiterleitenden Einrichtungen ATM NETWORK NODE und DHCP RELAY sind in Figur 2 nicht dargestellt.

Da die Einrichtungen LEAF NODE und DHCP RELAY Bestandteil eines ATM-Netzes sind, muss zwischen diesen eine PVC (Permanent Virtual Circuit, permanente virtuelle Verbindung) bestehen. Diese wird gekennzeichnet durch die Parameter VPI (Virtual Path Identifier) und VCI (Virtual Channel Identifier). Für die DHCP-Kommunikation der Figur 2 zwischen den Einrichtungen LEAF NODE und DHCP SERVER wird eine den beiden Einrichtungen LEAF NODE und DHCP RELAY bekannte Default-PVC, d.h. eine voreingestellte PVC, verwendet. Die Verwendung einer Default-PVC bedeutet, dass der Einrichtung LEAF NODE die von ihr für die Default-PVC zu verwendenden Parameter VCI und VPI vor Beginn der Konfiguration bekannt gegeben werden müssen. Weiterhin bedeutet die Verwendung einer Default-PVC, dass die nicht zu konfigurierenden Einrichtungen, welche jedoch Nachrichten im Rahmen der Konfiguration empfangen und versenden, d.h. die Einrichtungen ATM NETWORK ELEMENT und DHCP RELAY, die jeweils für die Default-PVC zu verwendenden Parameter VCI und VPI kennen und somit die Default-PVC für Konfigurationsvorgänge reserviert ist.

In Figur 2 sind jeweils über einem Pfeil die Namen der zwischen den Einrichtungen LEAF NODE und DHCP SERVER versendeten Nachrichten, und unter dem jeweiligen Pfeil in eckigen Klammern Informationsgehalte der Nachrichten angegeben. Zu Beginn des DHCP-Verfahrens sendet die Einrichtung LEAF NODE unter Verwendung der Default-PVC die Nachricht DHCP_DISCOVER an die Einrichtung DHCP SERVER, welche eine Identifikationsinformation CLIENT_ID der Einrichtung LEAF NODE umfasst. Die Einrichtung DHCP SERVER antwortet der Einrichtung LEAF NODE mit einer Nachricht DHCP_OFFER, welche neben der Identifikationsinformation CLIENT_ID der Einrichtung LEAF NODE IP-Konfigurationsdaten IP_CONFIG und ATM-Konfigurationsdaten ATM_CONFIG für die Einrichtung LEAF NODE umfasst. Die IP-Konfigurationsdaten IP_CONFIG weisen der Einrichtung LEAF NODE eine IP-Adresse zu. Die ATM-Konfigurationsdaten ATM_CONFIG geben Parameter VPI und VCI an, welche von der Einrichtung LEAF NODE für eine zukünftige ATM-Kommunikation zu verwenden sind. Diese Parameter VPI und VCI unterscheiden sich von den Parametern der von der Einrichtung LEAF NODE für die Konfiguration verwendeten Default-PVC. Bei der zukünftigen ATM-Kommunikation kann es sich z.B. um eine Kommunikation zwischen der Einrichtung LEAF NODE und einer für die Kontrolle und/oder Wartung der Einrichtung LEAF NODE zuständigen Einrichtung handeln, wie z.B. um die Kommunikation mit einem RNC (Radio Network Controller) oder mit einer O&M (Operation und Maintenance) Einrichtung eines UMTS Mobilfunkkommunikationssystems. Es wird somit eine Default-PVC für die Konfiguration der Einrichtung LEAF NODE verwendet, wobei im Rahmen der Konfiguration in der Einrichtung LEAF NODE eine neue PVC konfiguriert wird, welche für eine ATM-Kommunikation im Anschluss an die Konfiguration verwendet wird. Durch die ATM-Konfigurationsdaten ATM_CONFIG kann auch eine Mehrzahl von PVCs in der Einrichtung LEAF NODE konfiguriert werden.

Die Einrichtung LEAF NODE antwortet auf die Nachricht DHCP_OFFER gemäß dem üblichen DHCP-Verfahren mit einer Nachricht DHCP_REQUEST, welche die Identifikationsinformation CLIENT_ID der Einrichtung LEAF NODE, die IP-Konfigurationsdaten IP_CONFIG und die ATM-Konfigurationsdaten ATM_CONFIG wiederholt. Schließlich antwortet die Einrichtung DHCP SERVER auf die Nachricht DHCP_REQUEST gemäß dem üblichen DHCP-Verfahren mit einer Nachricht DHCP_ACK, welche die Identifikationsinformation CLIENT_ID der Einrichtung LEAF NODE wiederholt, und die zukünftig von der Einrichtung LEAF NODE verwendeten IP-Konfigurationsdaten IP_CONFIG und die ATM-Konfigurationsdaten ATM_CONFIG angibt.

Die DHCP-Nachrichten DHCP_DISCOVER, DHCP_OFFER, DHCP_REQUEST und DHCP_ACK werden üblicherweise per Broadcast an alle Teilnehmer eines Netzabschnittes versendet. Bei ATM-Netzen jedoch ist eine Broadcast-Versendung nicht möglich. Um eine Broadcast-Versendung in dem ATM-Netz zu emulieren, wird für die Versendung von DHCP-Nachrichten die Default-PVC verwendet. Für die Versendung von nicht-DHCP-Nachrichten wird nicht die Default-PVC verwendet. Um anzuzeigen, dass sie vor Beendigung der Konfiguration nicht in der Lage ist, Unicast-Nachrichten zu empfangen, d.h. dass es vor Beendigung der Konfiguration nicht möglich ist, Nachrichten dediziert an die Einrichtung LEAF NODE zu adressieren und zu versenden, setzt die Einrichtung LEAF NODE ein Broadcast-Bit in den DHCP-Nachrichten.

Gemäß dem DHCP-Standard ermöglicht DHCP die Konfiguration der IP-Schnittstelle. Gemäß dem beschriebenen Verfahren beinhalten die DHCP-Nachrichten DHCP_OFFER, DHCP_REQUEST und

DHCP_ACK überdies die ATM-Konfigurationsdaten ATM_CONFIG. Dies kann realisiert werden durch Verwendung von gemäß dem DHCP-Standard definierten optionalen Feldern, beschrieben z.B. in
S. Alexander, R. Droms: DHCP options and BOOTP vendor extensions, RFC 2132, IETF, März 1997.
Die ATM-Konfigurationsdaten ATM_CONFIG können in diese optionalen Felder eingefügt werden.

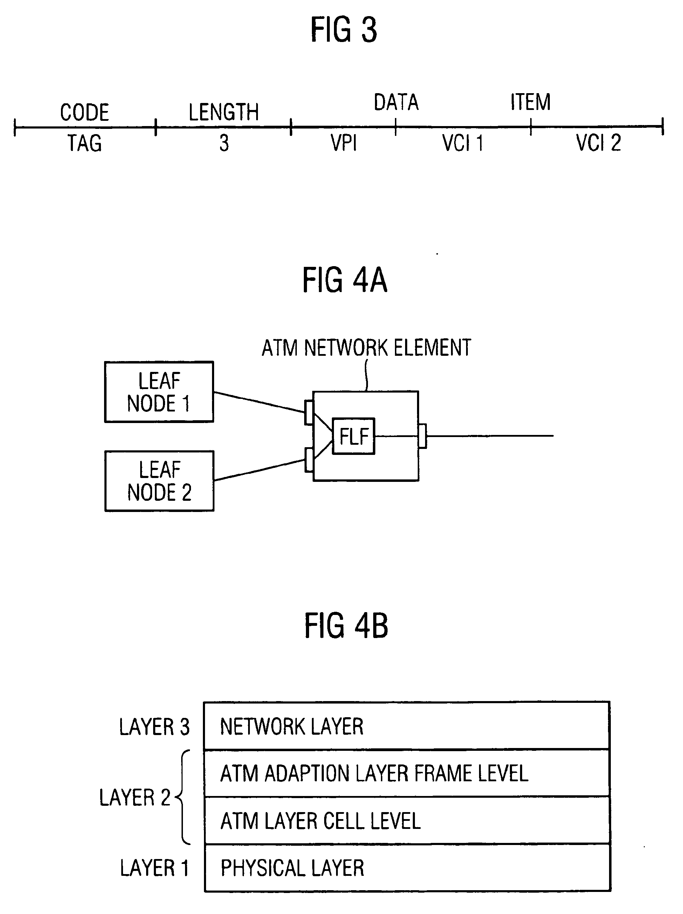

Figur 3 zeigt den Aufbau eines optionalen Zusatzfeldes einer DHCP-Nachricht, welches zur Übertragung der ATM-Konfigurationsdaten ATM_CONFIG verwendet wird. Zu Beginn steht die Identifikationsinformation CODE des Zusatzfeldes. Hierbei handelt es sich um eine Zahl TAG, welche gemäß dem DHCP-Standard festgelegte Werte aufweisen kann. Darauf folgt die Längenangabe LENGTH, welche den Wert 3 aufweist, da für den folgenden Inhalt DATA ITEM des optionalen Zusatzfeldes 3 Oktetts benötigt werden. Der Inhalt DATA ITEM setzt sich aus der ein Byte langen Angabe VPI der VPI der ATM-Konfigurationsdaten ATM_CONFIG und der zwei Byte langen Angabe VCI1 und VCI2 der VCI der ATM-Konfigurationsdaten ATM_CONFIG zusammen.

Nachdem die Einrichtungen LEAF NODE die Nachricht DHCP_ACK empfangen hat, findet die lokale IP- und ATM- Konfiguration in der Einrichtung LEAF NODE statt. Bei Vorhandensein einer bereits eingerichteten PVC überprüft die Einrichtungen LEAF NODE, ob diese mit den Angaben der Nachricht DHCP_ACK übereinstimmt. Bei mangelnder Übereinstimmung wird die bereits eingerichtete PVC entsprechend den Angaben der Nachricht DHCP_ACK umkonfiguriert. Die IP-Schnittstelle wird entsprechend den Angaben der Nachricht DHCP_ACK konfiguriert und mit der neuen PVC verknüpft. Weiterhin wird die Default-PVC mit der Schnittstelle verknüpft, so dass für DHCP-Nachrichten die Default-PVC verwendet wird. Im Fall eines Fehlers oder wenn aus einem anderen Grund eine Neukonfiguration nötig ist, konfiguriert die Einrichtungen LEAF NODE die IP-Schnittstelle zurück zum unkonfigurierten Zustand und führt die Neukonfiguration unter Verwendung der Default-PVC durch. Für die Nachrichten mit Ausnahme der DHCP-Nachrichten wird die neu eingerichtete PVC verwendet.

Es ist möglich, mehrere zu konfigurierende Einrichtungen LEAF NODE an die Einrichtung ATM NETWORK ELEMENT anzuschließen. Diese können für das erläuterte Konfigurations-Verfahren eine Default-PVC mit den gleichen Parametern VPI und VCI verwenden. Hierbei multiplext die Einrichtung ATM NETWORK ELEMENT die Nachrichten der mehreren Einrichtungen LEAF NODE auf eine einzige ausgehende PVC. Figur 4a zeigt den Fall, dass die Einrichtung ATM NETWORK ELEMENT an die beiden Einrichtungen LEAF NODE 1 und LEAF NODE 2 angeschlossen ist. Die Nachrichten im Rahmen der Konfiguration der Einrichtungen LEAF NODE 1 und LEAF NODE 2 gelangen in zwei unterschiedliche Input-Ports der Einrichtung ATM NETWORK ELEMENT, werden in einem Verfahrensschritt FLF (FLF: Frame Level Forwarding) gemäß den Ausführungen des folgenden Absatzes gemultiplext und über einen gemeinsamen Output-Port ausgegeben. Entsprechendes gilt in umgekehrter Richtung für die Nachrichtenversendung im Rahmen der Konfiguration über die Einrichtung ATM NETWORK ELEMENT zu den Einrichtungen LEAF NODE 1 und LEAF NODE 2.

Das Multiplexen der Nachrichten in dem Verfahrensschritt FLF aufgrund der Verwendung der gleichen Default-PVC für die Einrichtungen LEAF NODE 1 und LEAF NODE 2 kann nicht in Bezug auf ATM-Zellen durchgeführt werden, vielmehr müssen hierzu von der Einrichtung ATM NETWORK ELEMENT AAL-Rahmen betrachtet werden. Figur 4b zeigt den Aufbau der untersten drei Protokollschichten LAYER 1, LAYER 2 und LAYER 3 des ISO/OSI Protokollstapels der Einrichtung ATM NETWORK ELEMENT. Die unterste Schicht LAYER 1 stellt die physikalische Schicht PHYSICAL LAYER dar, als Übertragungsverfahren der physikalischen Schicht kann z.B. SDH (Synchronous Digital Hierarchy) oder PDH (Plesiochronous Digital Hierarchy) verwendet werden. Die zweite Schicht LAYER 2 besteht aus einer ATM-Schicht ATM LAYER CELL LEVEL, auf welcher ATM-Zellen betrachtet werden, und einer ATM Adaptionsschicht ATM ADAPTION LAYER FRAME LEVEL, auf welche AAL-Rahmen betrachtet werden. Bei der dritten Schicht LAYER 3 handelt es sich um die Netzwerk-Schicht NETWORK LAYER, welche IP verwendet. Das Multiplexen der Nachrichten der beiden Einrichtungen LEAF NODE 1 und LEAF NODE 2 erfolgt auf der ATM Adaptionsschicht ATM ADAPTION LAYER FRAME LEVEL. Das beschriebene Multiplexen erlaubt es, die gleiche Default-PVC für das gesamte ATM-Netz zu verwenden, wodurch die Anzahl der für die Konfiguration zu reservierenden PVCs reduziert wird.

Alternativ zur Verwendung der gleichen Default-PVC für die Verbindung von der Einrichtung ATM NETWORK ELEMENT in Richtung der Einrichtung DHCP RELAY für eine Mehrzahl von an eine Einrichtung ATM NETWORK ELEMENT angeschlossenen zu konfigurierenden Einrichtungen LEAF NODE können für die verschiedenen Einrichtungen LEAF NODE auch verschiedene Default-PVCs zum Einsatz kommen. Hierdurch entfällt das Multiplexen der Nachrichten der verschiedenen Einrichtungen LEAF NODE in der Einrichtung ATM NETWORK ELEMENT. Hierdurch steigt jedoch die Anzahl der für die Konfiguration verwendeten PVCs.

Vorzugsweise ist die Ausgestaltung der Einrichtungen ATM NETWORK ELEMENT und DHCP RELAY der Figur 1 folgendermaßen: bei der Einrichtung ATM NETWORK ELEMENT handelt es sich um einen Knoten des ATM-Netzes, welcher nicht DHCP-fähig ist. Dieser behandelt die DHCP-Nachrichten der Figur 2 wie andere ATM-Nachrichten und leitet diese gemäß den Parametern VPI und VCI über ATM weiter. Hingegen handelt es sich bei der Einrichtung DHCP RELAY um einen DHCP-fähigen Knoten, welcher den DHCP-Inhalt der DHCP-Nachrichten erkennt und diese dementsprechend an die für DHCP-Kommunikationen zuständige Einrichtung DHCP SERVER weiterleitet bzw. von der Einrichtung DHCP SERVER gesendete DHCP-Nachrichten empfängt und weiterleitet. Bei der Einrichtung DHCP RELAY handelt es sich aus Sicht der Einrichtung LEAF NODE in Bezug auf die IP-Schnittstelle um den ersten Knoten auf dem Weg zu der Einrichtung DHCP SERVER. Die Erfindung ermöglicht es somit durch Verwendung einer Default PVC, dass nicht DHCP-fähige ATM-Knoten das DHCP-Verfahren unterstützen, indem sie DHCP-Nachrichten weiterleiten. Anstelle der einen Einrichtung ATM NETWORK ELEMENT zwischen der Einrichtung LEAF NODE und der Einrichtung DHCP RELAY können sich eine Mehrzahl von nicht IP- bzw. DHCP-fähigen Einrichtungen befinden.

Alternativ zur beschriebenen Konstellation der Figur 1 ist es möglich, dass die Einrichtung ATM NETWORK ELEMENT nicht vorhanden ist, so dass die Einrichtungen LEAF NODE DHCP-Nachrichten direkt an die Einrichtung DHCP RELAY sendet. Weiterhin ist es möglich, dass die Einrichtungen LEAF NODE DHCP-Nachrichten direkt an die Einrichtung DHCP SERVER sendet. Die Einrichtungen LEAF NODE verwendet auch in diesen Fällen die Default-PVC.

Die Einrichtung LEAF NODE muss für die Konfiguration durch im ATM-Netz eindeutige Identifikationsinformationen identifizierbar sein. Bei DHCP stehen hierzu die Hardware-Adresse der Einrichtung LEAF NODE zur Verfügung, enthalten in dem DHCP Header-Feld "chaddr", sowie ein dedizierter "client identifier", entsprechend dem DHCP Tag 61 oder 97. Es bietet sich die Verwendung des dedizierten "client identifiers" an, da die Hardware-Adresse auf eine Länge von 16 Byte beschränkt ist. Folgende Möglichkeiten können zur Identifizierung der Einrichtungen LEAF NODE durch den dedizierten "client identifier" verwendet werden:
- die ATM-Hardware-Adresse,
- ein dedizierter "Universally Unique Identifier" (UUID), welcher an die Haupt-Kontrolleinrichtung der Einrichtungen LEAF NODE gekoppelt ist,
- ortsspezifische Informationen, wie z.B. GPS-Koordinaten (GPS: Global Positioning System) oder netzbetreiberspezifische Werte.

Die beschriebene Vorgehensweise ermöglicht die Autokonfiguration einer Einrichtung eines ATM-Netzes sowohl hinsichtlich der Konfiguration der IP- als auch hinsichtlich der Konfiguration der ATM-Schnittstelle. Hierzu ist weder eine Modifikation von ATM noch eine Modifikation von DHCP nötigt, bezüglich DHCP wird lediglich ausgenutzt, dass für herstellerspezifische Informationen reservierte Felder zur Übermittlung der ATM-Konfigurationsdaten verwendet werden. Alternativ zum Einsatz der Erfindung könnte eine manuelle Konfiguration der Einrichtung erfolgen. Hierzu müsste ein Techniker am Ort der Einrichtung die entsprechenden Konfigurationsdaten eingeben. Dies erweist sich als aufwendig und somit als nachteilhaft bei einer großen Anzahl von zu konfigurierenden Einrichtungen.

Die Erfindung ist sowohl auf die Erstinstallation bzw. Konfiguration einer Einrichtung anwendbar, als auch auf eine Umkonfiguration einer bereits zuvor im ATM-Netz konfigurierten Einrichtung, wobei die Umkonfiguration die IP- und/oder die ATM-Schnittstelle betreffen kann.

## Patentansprüche

1. Verfahren zum Konfigurieren einer ersten Einrichtung (LEAF NODE) eines ATM-Netzes, bei dem die erste Einrichtung (LEAF NODE)
unter Verwendung von ersten ATM-Verbindungsinformationen eine DHCP-Anfrage (DHCP_DISCOVER, DHCP_REQUEST) an eine zweite Einrichtung (DHCP SERVER) versendet,
eine von der zweiten Einrichtung (DHCP SERVER) zur ersten Einrichtung (LEAF NODE) unter Verwendung der ersten ATM-Verbindungsinformationen übertragene DHCP-Antwort (DHCP_OFFER, DHCP_ACK) empfängt, **dadurch gekennzeichnet, dass** die DHCP-Antwort (DHCP_OFFER, DHCP_ACK) Informationen über zweite ATM-Verbindungsinformationen (ATM_CONFIG) enthält, und die erste Einrichtung die zweiten ATM-Verbindungsinformationen (ATM_CONFIG) zur Versendung weiterer Nachrichten verwendet.

2. Verfahren nach Anspruch 1, bei dem
es sich bei der Versendung weiterer Nachrichten unter Verwendung der zweiten ATM-Verbindungsinformationen (ATM_CONFIG) um Nachrichtenversendungen an zumindest eine von der zweiten Einrichtung (DHCP SERVER) unterschiedliche Einrichtung handelt.

3. Verfahren zum Konfigurieren einer ersten Einrichtung (LEAF NODE) eines ATM-Netzes, bei dem eine zweite Einrichtung (DHCP SERVER)
eine von der ersten Einrichtung (LEAF NODE) unter Verwendung von ersten ATM-Verbindungsinformationen zu der zweiten Einrichtung (DHCP SERVER) übertragene DHCP-Anfrage (DHCP_DISCOVER, DHCP_REQUEST) empfängt,
eine DHCP-Antwort (DHCP_OFFER, DHCP_ACK) unter Verwendung der ersten ATM-Verbindungsinformationen an die erste Einrichtung (LEAF NODE) sendet, **dadurch gekennzeichnet, dass** die DHCP-Antwort (DHCP_OFFER, DHCP_ACK) Informationen über zweite ATM-Verbindungsinformationen (ATM_CONFIG) enthält.

4. Verfahren nach einem der Ansprüche 1 bis 3, bei dem
die ersten ATM-Verbindungsinformationen einer vor der Versendung der DHCP-Anfrage (DHCP_DISCOVER) eingerichteten ATM-Verbindung entsprechen.

5. Verfahren nach einem der Ansprüche 1 bis 4, bei dem
die DHCP-Anfrage (DHCP_DISCOVER, DHCP_REQUEST) und die DHCP-Antwort (DHCP_OFFER, DHCP_ACK) zwischen der ersten (LEAF NODE) und der zweiten Einrichtung (DHCP SERVER) durch zumindest eine nicht-DHCP-fähige Einrichtung (ATM NETWORK ELEMENT) weitergeleitet werden.

6. Verfahren nach einem der Ansprüche 1 bis 5, bei dem
unter Verwendung von in der DHCP-Antwort (DHCP_OFFER, DHCP_ACK) enthaltenen Informationen (IP_CONFIG, ATM_CONFIG) eine IP-Konfiguration und eine ATM-Konfiguration der ersten Einrichtung (LEAF NODE) erfolgt.

7. Verfahren nach einem der Ansprüche 1 bis 6, bei dem
die zweiten ATM-Verbindungsinformationen (ATM_CONFIG) in einem optionalen Feld der DHCP-Antwort (DHCP_OFFER, DHCP_ACK) enthalten sind.

8. Verfahren nach einem der Ansprüche 1 bis 7, bei dem
das Verfahren in Bezug auf eine Mehrzahl von ersten Einrichtungen (LEAF NODE 1, LEAF NODE 2) eingesetzt wird, wobei die ersten ATM-Verbindungsinformationen für die Mehrzahl der ersten Einrichtungen (LEAF NODE 1, LEAF NODE 2) gleich sind.

9. Verfahren nach Anspruch 8, bei dem
eine dritte Einrichtung (ATM NETWORK ELEMENT) jeweils eine von den mehreren ersten Einrichtungen (LEAF NODE 1, LEAF NODE 2) unter Verwendung der ersten ATM-Verbindungsinformationen gesendete DHCP-Anfrage (DHCP_DISCOVER, DHCP_REQUEST) empfängt, die DHCP-Anfragen (DHCP_DISCOVER) vor der Weiterleitung auf ATM-Rahmenebene betrachtet, und die DHCP-Anfragen (DHCP_DISCOVER) vor der Weiterleitung multiplext.

10. Verfahren nach einem der Ansprüche 1 bis 9, bei dem
es sich bei der ersten Einrichtung (LEAF NODE) um eine Basisstation eines Mobilfunkkommunikationssystems und bei der zweiten Einrichtung (DHCP SERVER) um einen DHCP-Server handelt.

11. Verfahren nach einem der Ansprüche 1 bis 10, bei dem
die ersten ATM-Verbindungsinformationen von der ersten Einrichtung (LEAF NODE) ausschließlich zur Versendung von DHCP-Nachrichten eingesetzt werden.

12. Einrichtung (LEAF NODE) eines ATM-Netzes, mit
Mitteln zum Versenden einer DHCP-Anfrage (DHCP_DISCOVER, DHCP_REQUEST) an eine weitere Einrichtung (DHCP SERVER) unter Verwendung von ersten ATM-Verbindungsinformationen, Mitteln zum Empfangen einer von der weiteren Einrichtung (DHCP SERVER) zu der Einrichtung (LEAF NODE) unter Verwendung der ersten ATM-Verbindungsinformationen übertragenen DHCP-Antwort (DHCP_OFFER, DHCP_ACK), **dadurch gekennzeichnet, dass** die DHCP-Antwort (DHCP_OFFER, DHCP_ACK) Informationen über zweite ATM-Verbindungsinformationen (ATM_CONFIG) enthält, und
Mitteln zum Verwenden der zweiten ATM-Verbindungsinformationen (ATM_CONFIG) zur Versendung weiterer Nachrichten.

13. Einrichtung (DHCP SERVER) eines ATM-Netzes, mit
Mitteln zum Empfangen einer von einer weiteren Einrichtung (LEAF NODE) unter Verwendung von ersten ATM-Verbindungsinformationen zu der Einrichtung (DHCP SERVER) übertragenen DHCP-Anfrage (DHCP_DISCOVER, DHCP_REQUEST), Mitteln zum Versenden einer DHCP-Antwort (DHCP_OFFER, DHCP_ACK) unter Verwendung der ersten ATM-Verbindungsinformationen an die weitere Einrichtung (LEAF NODE), **dadurch gekennzeichnet, dass** die DHCP-Antwort (DHCP_OFFER, DHCP_ACK) Informationen über zweite ATM-Verbindungsinformationen (ATM_CONFIG) enthält.

## Claims

1. Method for configuring a first facility (LEAF NODE) of an ATM network, in which the first facility (LEAF NODE) dispatches a DHCP enquiry (DHCP_DISCOVER, DHCP_REQUEST) to a second facility (DHCP SERVER) by using first ATM connection information,
receives a DHCP response (DHCP_OFFER, DHCP_ACK) transmitted from the second facility (DHCP SERVER) to the first facility (LEAF NODE) by using the first ATM connection information, **characterized in that** the DHCP response (DHCP_OFFER, DHCP_ACK) contains information on second ATM connection information (ATM_CONFIG), and the first facility uses the second ATM connection information (ATM_CONFIG) for dispatching further messages.

2. Method according to Claim 1, in which the dispatching of further messages by using the second ATM connection information (ATM_CONFIG) involves dispatches of messages to at least one facility which is different from the second facility (DHCP SERVER).

3. Method for configuring a first facility (LEAF NODE) of an ATM network, in which a second facility (DHCP SERVER) receives a DHCP enquiry (DHCP_DISCOVER, DHCP_REQUEST) transmitted by the first facility (LEAF NODE) to the second facility (DHCP SERVER) by using first ATM connection information, sends a DHCP response (DHCP_OFFER, DHCP_ACK) to the first facility (LEAF NODE) by using the first ATM connection information, **characterized in that** the DHCP response (DHCP_OFFER, DHCP_ACK) contains information on second ATM connection information (ATM_CONFIG).

4. Method according to one of Claims 1 to 3, in which the first ATM connection information corresponds to an ATM connection setup before the dispatch of the DHCP enquiry (DHCP_DISCOVER).

5. Method according to one of Claims 1 to 4, in which the DHCP enquiry (DHCP_DISCOVER, DHCP_REQUEST) and the DHCP response (DHCP_OFFER, DHCP_ACK) are forwarded between the first facility (LEAF NODE) and the second facility (DHCP SERVER) by at least one non-DHCP-capable facility (ATM NETWORK ELEMENT).

6. Method according to one of Claims 1 to 5, in which an IP configuration and an ATM configuration of the first facility (LEAF NODE) is effected by using information (IP_CONFIG, ATM_CONFIG) contained in the DHCP response (DHCP_OFFER, DHCP_ACK).

7. Method according to one of Claims 1 to 6, in which the second ATM connection information (ATM_CONFIG) is contained in an optional field of the DHCP response (DHCP_OFFER, DHCP_ACK).

8. Method according to one of Claims 1 to 7, in which the method is used with respect to a plurality of first facilities (LEAF NODE 1, LEAF NODE 2), the first ATM connection information being identical for the plurality of first facilities (LEAF NODE 1, LEAF NODE 2).

9. Method according to Claim 8, in which a third facility (ATM NETWORK ELEMENT) in each case receives a DHCP enquiry (DHCP_DISCOVER, DHCP_REQUEST) sent by the number of first facilities (LEAF NODE 1, LEAF NODE 2) by using the first ATM connection information, considers the DHCP enquiries (DHCP_DISCOVER) before forwarding at ATM frame level and multiplexes the DHCP enquiries (DHCP_DISCOVER) before forwarding.

10. Method according to one of Claims 1 to 9, in which the first facility (LEAF NODE) is a base station of a mobile radio communication system and the second facility (DHCP SERVER) is a DHCP server.

11. Method according to one of Claims 1 to 10, in which the first ATM connection information is used by the first facility (LEAF NODE) exclusively for dispatching of DHCP messages.

12. Facility (LEAF NODE) of an ATM network, comprising means for dispatching a DHCP enquiry (DHCP_DISCOVER, DHCP_REQUEST) to a further facility (DHCP SERVER) by using first ATM connection information, means for receiving a DHCP response (DHCP_OFFER, DHCP_ACK) transmitted by the further facility (DHCP SERVER) to the facility (LEAF NODE) by using the first ATM connection information, **characterized in that** the DHCP response (DHCP_OFFER, DHCP_ACK) contains information on second ATM connection information (ATM_CONFIG), and
means for using the second ATM connection information (ATM_CONFIG) for dispatching further messages.

13. Facility (DHCP SERVER) of an ATM network, comprising means for receiving a DHCP enquiry (DHCP_DISCOVER, DHCP_REQUEST) transmitted by a further facility (LEAF NODE) to the facility (DHCP SERVER) by using first ATM connection information,
means for dispatching a DHCP response (DHCP_OFFER, DHCP_ACK) to the further facility (LEAF NODE) by using the first ATM connection information, **characterized in that** the DHCP response (DHCP_OFFER, DHCP_ACK) contains information on second ATM connection information (ATM_CONFIG).

## Revendications

1. Procédé de configuration d'un premier dispositif (LEAF NODE) d'un réseau ATM, dans lequel le premier dispositif (LEAF NODE),
- en utilisant des premières informations de liaison ATM, émet une demande DHCP (DHCP_DISCOVER, DHCP_REQUEST) à un deuxième dispositif (DHCP SERVER) ;
- reçoit une réponse DHCP (DHCP_OFFER, DHCP_ACK) transmise par le deuxième dispositif (DHCP SERVER) au premier dispositif (LEAF NODE) en utilisant les premières informations de liaison ATM, **caractérisé en ce que** la réponse DHCP (DHCP_OFFER, DHCP_ACK) contient des informations concernant des deuxièmes informations de liaison ATM (ATM_CONFIG) et **en ce que** le premier dispositif utilise les deuxièmes informations de liaison ATM (ATM_CONFIG) pour émettre d'autres messages.

2. Procédé selon la revendication 1, dans lequel,
lors de l'émission d'autres messages avec utilisation des deuxièmes informations de liaison ATM (ATM_CONFIG), il s'agit d'émissions de messages à au moins un dispositif différent du deuxième dispositif (DHCP SERVER).

3. Procédé de configuration d'un premier dispositif (LEAF NODE) d'un réseau ATM, dans lequel un deuxième dispositif (DHCP SERVER)
reçoit une demande DHCP (DHCP_DISCOVER, DHCP_REQUEST) transmise au deuxième dispositif (DHCP SERVER) par le premier dispositif (LEAF NODE) en utilisant des premières informations de liaison ATM,
émet une réponse DHCP (DHCP_OFFER, DHCP_ACK) au premier dispositif (LEAF NODE) en utilisant les premières informations de liaison ATM, **caractérisé en ce que** la réponse DHCP (DHCP_OFFER, DHCP_ACK) contient des informations concernant des deuxièmes informations de liaison ATM (ATM_CONFIG).

4. Procédé selon l'une quelconque des revendications 1 à 3, dans lequel
les premières informations de liaison ATM correspondent à une liaison ATM configurée avant l'émission de la demande DHCP (DHCP_DISCOVER).

5. Procédé selon l'une quelconque des revendications 1 à 4, dans lequel
la demande DHCP (DHCP_DISCOVER, DHCP_REQUEST) et la réponse DHCP (DHCP_OFFER, DHCP_ACK) sont acheminées entre le premier dispositif (LEAF NODE) et le deuxième dispositif (DHCP SERVER) par au moins un dispositif non apte au DHCP (ATM NETWORK ELEMENT).

6. Procédé selon l'une quelconque des revendications 1 à 5, dans lequel
une configuration IP et une configuration ATM du premier dispositif (LEAF NODE) sont réalisées en utilisant des informations (IP_CONFIG, ATM_CONFIG) contenues dans la réponse DHCP (DHCP_OFFER, DHCP_ACK).

7. Procédé selon l'une quelconque des revendications 1 à 6, dans lequel
les deuxièmes informations de liaison ATM (ATM_CONFIG) sont contenues dans un champ optionnel de la réponse DHCP (DHCP_OFFER, DHCP_ACK).

8. Procédé selon l'une quelconque des revendications 1 à 7, dans lequel
le procédé est utilisé par rapport à une pluralité de premiers dispositifs (LEAF NODE 1, LEAF NODE 2), les premières informations de liaison ATM étant identiques pour la pluralité des premiers dispositifs (LEAF NODE 1, LEAF NODE 2).

9. Procédé selon la revendication 8, dans lequel
un troisième dispositif (ATM NETWORK ELEMENT) reçoit respectivement une demande DHCP (DHCP_DISCOVER, DHCP_REQUEST) émise par les plusieurs premiers dispositifs (LEAF NODE 1, LEAF NODE 2) en utilisant les premières informations de liaison ATM, considère les demandes DHCP (DHCP_DISCOVER) au niveau de la trame ATM avant leur acheminement et multiplexe les demandes DHCP (DHCP_DISCOVER) avant leur acheminement.

10. Procédé selon l'une quelconque des revendications 1 à 9, dans lequel
le premier dispositif (LEAF NODE) est une station de base d'un système de radiocommunication mobile et le deuxième dispositif (DHCP SERVER) est un serveur DHCP.

11. Procédé selon l'une quelconque des revendications 1 à 10, dans lequel
les premières informations de liaison ATM sont utilisées par le premier dispositif (LEAF NODE) exclusivement pour émettre des messages DHCP.

12. Dispositif (LEAF NODE) d'un réseau ATM, comprenant
des moyens pour émettre une demande DHCP (DHCP_DISCOVER, DHCP_REQUEST) à un autre dispositif (DHCP SERVER) en utilisant des premières informations de liaison ATM,
des moyens pour recevoir une réponse DHCP (DHCP_OFFER, DHCP_ACK) transmise par l'autre dispositif (DHCP SERVER) au dispositif (LEAF NODE) en utilisant les premières informations de liaison ATM, **caractérisé en ce que** la réponse DHCP (DHCP_OFFER, DHCP_ACK) contient des informations concernant les deuxièmes informations de liaison ATM (ATM_CONFIG), et
des moyens pour utiliser les deuxièmes informations de liaison ATM (ATM_CONFIG) pour l'émission d'autres messages.

13. Dispositif (DHCP SERVER) d'un réseau ATM, comprenant
des moyens pour recevoir une demande DHCP (DHCP_DISCOVER, DHCP_REQUEST) transmise au dispositif (DHCP SERVER) par un autre dispositif (LEAF NODE) en utilisant des premières informations de liaison ATM,
des moyens pour émettre à l'autre dispositif (LEAF NODE) une réponse DHCP (DHCP_OFFER, DHCP_ACK) en utilisant les premières informations de liaison ATM, **caractérisé en ce que** la réponse DHCP (DHCP_OFFER, DHCP_ACK) contient des informations concernant les deuxièmes informations de liaison ATM (ATM_CONFIG).
